(19) Europäisches Patentamt
European Patent Office
Office européen des brevets

(11) **EP 2 375 352 A1**

(12) **DEMANDE DE BREVET EUROPEEN**

(43) Date de publication:
**12.10.2011 Bulletin 2011/41**

(51) Int Cl.:
*G06F 17/50* (2006.01)          *G01V 1/30* (2006.01)
*G01V 11/00* (2006.01)

(21) Numéro de dépôt: **10290373.9**

(22) Date de dépôt: **05.07.2010**

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**
Etats d'extension désignés:
**BA ME RS**

(30) Priorité: **26.08.2009  FR 0904083**

(71) Demandeur: **IFP Energies nouvelles
92852 Rueil-Malmaison Cedex (FR)**

(72) Inventeurs:
• **Ding, Didier Yu
  78230 Le Pecq (FR)**
• **Roggero, Frédéric
  92500 Rueil-Malmaison (FR)**

(54) **Méthode pour exploiter un réservoir pétrolier à partir d'un calage d'historique optimisé**

(57)  - Procédé pour exploiter un réservoir pétrolier à partir d'un modèle de réservoir et d'un calage d'historique optimisé.
- On définit, en fonction de $M$ paramètres, une fonction objectif globale mesurant les écarts entre les données d'historique mesurées et les données d'historique simulées. Puis, on décompose cette fonction objectif globale en une somme de $k$ fonctions objectifs locales. Chaque fonction objectif locale mesure les écarts sur une région géographique à partir de $m_k$ paramètres, choisis parmi les $M$ paramètres, et ayant un impact significatif sur les données d'historique de la région. La région est déterminée en minimisant ce nombre $m_k$ de paramètres. Puis, on modifie le modèle en minimisant la fonction objectif globale au moyen d'une méthode de gradient, dans laquelle on estime les dérivées des fonctions objectif locales au moyen d'une technique de perturbation de paramètres. Pour chaque fonction objectif locale, la matrice de perturbation utilisée a un rang égal au nombre de paramètres $m_k$ de la fonction objectif locale. Enfin, on utilise le modèle ainsi calé pour exploiter le réservoir.
- Application notamment à la caractérisation de gisements pétroliers.

Fig. 1

**Description**

La présente invention concerne le domaine technique de l'industrie pétrolière, et plus particulièrement la caractérisation des réservoirs pétroliers par construction d'une représentation du réservoir, appelée modèle de réservoir.

L'optimisation et l'exploitation des gisements pétroliers reposent sur une description aussi précise que possible de la structure, des propriétés pétrophysiques, des propriétés fluides, etc., du gisement étudié. Pour ce faire, les spécialistes utilisent un outil qui permet de rendre compte de ces aspects de façon approchée : le modèle de réservoir. Un tel modèle constitue une maquette du sous-sol, représentative à la fois de sa structure et de son comportement. Généralement, ce type de maquette est représenté sur un ordinateur, et l'on parle alors de modèle numérique.

Ces modèles bien connus et largement utilisés dans l'industrie pétrolière, permettent de déterminer de nombreux paramètres techniques relatifs à la recherche, l'étude ou l'exploitation d'un réservoir, d'hydrocarbures par exemple. En effet, un modèle de réservoir est représentatif de la structure du réservoir ainsi que de son comportement. On peut ainsi par exemple déterminer quelles sont les zones qui ont le plus de chances de contenir des hydrocarbures, les zones dans lesquelles il peut être intéressant/nécessaire de forer un puits d'injection pour améliorer la récupération des hydrocarbures, le type d'outils à utiliser, les propriétés des fluides utilisés et récupérés.... Ces interprétations de modèles de réservoir en termes de « paramètres techniques d'exploitation » sont bien connues des spécialistes, même si de nouvelles méthodes sont régulièrement développées. Il est donc crucial, dans le domaine pétrolier, de construire un modèle de réservoir aussi précis que possible. Pour ce faire, l'intégration de toutes les données disponibles est indispensable.

Un modèle de réservoir a donc pour vocation de rendre compte, au mieux, de toutes les informations d'un gisement. Un modèle de réservoir est représentatif lorsqu'une simulation de réservoir fournit des estimations de données d'historique très proches des données observées. On appelle données d'historique, les données de production issues de mesures aux puits en réponse à la production du réservoir (production d'huile, production d'eau d'un ou plusieurs puits, ratio gaz/huile (GOR), proportion d'eau de production ("water cut")), et/ou les données de sismiques répétitives (impédances sismiques 4D dans une ou plusieurs régions, etc.). Une simulation de réservoir est une technique permettant de simuler les écoulements de fluides au sein d'un réservoir au moyen d'un logiciel appelé simulateur d'écoulement.

Le calage d'historique ("history matching") consiste à modifier les paramètres d'un modèle de réservoir, tels que les perméabilités, les porosités ou les skins de puits (représentant les endommagements autour du puits), les connections de failles..., pour minimiser les écarts entre les données d'historique simulées et mesurées. Les paramètres peuvent être liés à des régions géographiques comme les perméabilités ou porosités autour d'un puits ou plusieurs puits.

Les techniques de calage d'historique assisté sont largement utilisées pour caractériser un réservoir, en intégrant les données de puits et les données sismiques. On connaît par exemple les techniques décrites dans les documents suivants :

- Roggero, F. et Hu, L.Y.: "Gradual Deformation of Continuous Geostatistical Models for History Matching", paper SPE 49004, Proc. SPE Annual Technical Conference and Exhibition, New Orleans, USA, 1998;

- Gosselin, O., Cominelli, A. van den Berg, S. et Chowdhury, S.D.: "A Gradient-Based Approach for History Matching of Both Production and 4D Seismic Data", Proceeding 7th European Conference on the Math. of Oil Recovery, Baveno, Italy, 2000;

- Cheng, H., Wen, X., Milliken, W.J. et Datta-Gupta, A.: "Field Experiences with Assisted and Automated History Matching", papier SPE 89857, SPE ATC&E, Houston, TX, USA, 2004;

- Roggero, F., Ding, D.Y., Berthet, P., Lerat, O., Cap, J. et Schreiber, P.E.: "Matching of Production History and 4D Seismic Data - Application to the Girassol Field, Offshore Angola", papier SPE 109929, SPE ATC&E, Anaheim, California, USA, 2007.

Au cours du calage d'historique, on définit d'abord une fonction objectif qui mesure les écarts entre les données d'historique observées et les données d'historique simulées. Plus le nombre de paramètres du modèle de réservoir est grand, plus le calage est difficile, car il faut faire davantage de simulations pour évaluer la fonction objectif afin de trouver un meilleur résultat.

Différentes techniques d'optimisation sont développées pour minimiser la fonction objectif. Les approches basées sur la méthode des gradients (Gosselin, O., Cominelli, A. van den Berg, S. et Chowdhury, S.D.: "A Gradient-Based Approach for History Matching of Both Production and 4D Seismic Data", Proceeding 7th European Conference on the Math. of Oil Recovery, Baveno, Italy, 2000) sont largement utilisées dans le calage historique. D'autres approches comme les optimisations stochastiques (Mohamed, L., Christie, M. et Demyanov, V.: "Comparison of Stochastic Sampling Algorithms for Uncertainty Quantification", paper SPE119139 presented at SPE Reservoir Simulation Symposium, Houston, Feb. 2-4, 2009), ou les algorithmes d'apprentissage adaptatif (Feraille, M. et Roggero, F.: "Uncertainty Quantification for Mature Field Combining the Bayesian Inversion Formalism and Experimental Design Approach", 9th European Conf. on Math. of Oil Recovery, Cannes, France, 30 August - 2 Sept. 2004) sont parfois aussi utilisées. Dans toutes ces approches, on applique directement les méthodes d'optimisation à la fonction objectif qui contient l'ensemble des données du réservoir.

Ainsi, les techniques de calage d'historique assisté sont développées pour aider les ingénieurs de réservoir à améliorer l'efficacité du calage. Mais ce calage d'historique est généralement un processus long et fastidieux, qui nécessite aussi beaucoup d'efforts et d'expertise de la part des ingénieurs de réservoir. Ces méthodes nécessitent de nombreuses simulations de réservoir pour évaluer la fonction objectif, d'autant plus que le nombre de paramètres est grand. Ces techniques sont donc très coûteuses en temps CPU, et ne sont donc pas toujours adaptées directement aux besoins des spécialistes en charge de l'exploitation du réservoir pétrolier. Il est donc important de réduire le nombre de simulations dans le processus d'optimisation.

Pour réduire le nombre de simulations, Maschio, C. et Schiozer, D.J.: "A new methodology for assisted history matching using independent objective functions" Petroleum Science and Technology, v 26, n 9, p 1047-1062, June 2008, proposent d'utiliser des fonctions objectifs indépendantes. Dans cette approche, la fonction objectif globale est décomposée en plusieurs fonctions objectif totalement indépendantes, et il est supposé qu'un paramètre qui influence une fonction objectif indépendante ne doit pas avoir d'impact sur d'autres fonctions objectif indépendantes. En pratique, il est très difficile de trouver des cas vérifiant cette hypothèse. De plus, cette méthode consiste à minimiser les fonctions objectif indépendantes, sans considérer la minimisation de la fonction objectif globale.

Ainsi, l'objet de l'invention concerne un procédé pour exploiter un réservoir pétrolier à partir d'un modèle de réservoir, dans lequel on réalise un calage d'historique où le nombre de simulations de réservoir est réduit. Le procédé utilise une approche d'optimisation de fonctions objectif locales définies par régions, tout en considérant la cohérence globale du problème en minimisant la fonction objectif globale sur l'ensemble des données du réservoir. La réduction du nombre de simulations de réservoir est obtenue d'une part par une réduction du nombre de paramètres pour les fonctions objectif locales, via un choix de région pour la décomposition, et d'autre part, par une planification des perturbations de paramètres à réaliser pour minimiser la fonction objectif globale.

**Le procédé selon l'invention**

L'invention concerne un procédé (ou méthode) pour exploiter un réservoir pétrolier à partir d'un modèle de réservoir constitué d'un ensemble de mailles, auxquelles sont affectées des valeurs d'au moins $M$ paramètres issues de mesures au sein du réservoir pétrolier. Le procédé comporte les étape suivantes :

- on définit, en fonction desdits $M$ paramètres, une fonction objectif globale mesurant des écarts entre des valeurs de données d'historique mesurées et des valeurs de données d'historique simulées au moyen dudit modèle de réservoir ;

- on décompose ladite fonction objectif globale en une somme de $k$ fonctions objectifs locales, chaque fonction objectif locale mesurant lesdits' écarts sur une région géographique dudit réservoir, on définit chaque fonction objectif locale à partir de $m_k$ paramètres ayant un impact sur lesdites données d'historique correspondant à chaque région, lesdits $m_k$ paramètres étant choisis parmi lesdits $M$ paramètres, et chaque région étant déterminée de façon à minimiser ledit nombre $m_k$ de paramètres ;

- on modifie des valeurs de paramètres en minimisant ladite fonction objectif globale au moyen d'une méthode de gradient, dans laquelle on estime des dérivées des fonctions objectif locales par rapport aux paramètres $m_k$ au moyen d'une technique de perturbation de paramètres basée sur une matrice de perturbations ayant un rang égal au nombre de paramètres $m_k$ de ladite fonction objectif locale ; et

- on utilise ledit modèle ainsi modifié pour exploiter ledit réservoir.

Selon l'invention, les $m_k$ paramètres peuvent être sélectionnés au moyen d'une analyse de sensibilité pour chaque fonction objectif locale, et les perturbations peuvent être effectuées avec différentes valeurs pour un même paramètre.

Les données d'historique sont de préférence des données de production issues de mesures aux puits en réponse à une production du réservoir, et/ou des données de sismiques répétitives. Les données de production peuvent être choisies parmi les données suivantes : production d'huile, production de gaz, production d'eau de puits, ratio gaz/huile (GOR), proportion d'eau de production, pression, température, composition des hydrocarbures. Les $M$ paramètres peuvent être choisis parmi les paramètres suivants : propriétés pétrophysiques telles que perméabilité, porosité, perméabilités relatives et pressions capillaires, propriétés pétroélastiques, distribution spatiale de faciès, endommagement autour de puits, indice de connectivité de puits, connexion ou rejets de failles, paramètres structuraux.

Selon l'invention, on peut déterminer les coefficients de la matrice de perturbations en réalisant les étapes suivantes :

i. on réduit le nombre de coefficients à générer en appliquant un coefficient identique pour une perturbation donnée, aux paramètres intervenant dans une même fonction objectif locale ;
ii. on génère aléatoirement lesdits coefficients de la matrice de perturbations tout en respectant l'étape i ;
iii. on modifie lesdits coefficients de façon à minimiser une erreur sur l'estimation des dérivées des fonctions objectif locales par rapport aux paramètres $m_k$.

Pour calculer l'erreur $\varepsilon_{tot}$, on peut utiliser la formule suivante:

$$\varepsilon_{tot} = \sum_{k=1}^{N_{reg}} \sum_{j=1}^{m_k} (D_j H_{mk} - 2m_k)^2$$

avec :

- $N_{reg}$ : nombre de fonctions objectif locales
- $D_j H_{mk}$ : dérivée numérique de $H_{mk}$ part rapport à un paramètre $\lambda_{k,j}$

$$H_{mk}(\lambda_{k,1}, \lambda_{k,2}, ..., \lambda_{k,m_k}) = \sum_{j=1}^{m_k} \sum_{i=1}^{m_k} \lambda_{k,i} \lambda_{k,j}$$

Le procédé (ou méthode) de calage d'historique selon l'invention, permet donc de réduire le temps CPU nécessaire au calage des données d'historique, et donc, de diminuer significativement le temps passé dans les études de réservoir, permettant ainsi de répondre aux attentes des ingénieurs réservoirs en charge de l'exploitation d'un réservoir pétrolier. Cette approche est générale, car les interférences entre les fonctions objectifs locales et les paramètres peuvent être prises en compte, puisqu'un paramètre peut avoir un impact sur plusieurs fonctions objectifs locales.

D'autres caractéristiques et avantages du procédé selon l'invention, apparaîtront à la lecture de la description ci-après d'exemples non limitatifs de réalisations, en se référant aux figures annexées et décrites ci-après.

**Présentation des figures**

- La figure 1 montre un réservoir hétérogène avec 4 puits producteurs $P_1$, $P_2$, $P_3$ et $P_4$. Les paramètres $K_1$, $K_2$, $K_3$ et $K_4$ représentent les perméabilités (ou multiplicateurs de perméabilités) autour de ces 4 puits.

- La figure 2 montre le réservoir hétérogène avec 25 puits dont 12 injecteurs (I1 à I12) et 13 producteurs (P1 à P13) dans l'exemple. Ce réservoir est maillé avec 50 mailles dans la direction $x$ et 50 mailles dans la direction $y$.

- La figure 3 montre le schéma de perturbations. Les numéros dans les cercles correspondent aux numéros de perturbations.

- La figure 4 montre la variation de la fonction objectif dans la procédure d'optimisation avec l'approche conventionnelle. L'axe X correspond au nombre de simulations pour évaluer la fonction objectif, et l'axe Y représente la valeur de la fonction objectif.

- La figure 5 montre la variation de la fonction objectif dans la procédure d'optimisation avec le procédé selon l'invention. L'axe X correspond au nombre de simulations pour évaluer la fonction objectif, et l'axe Y représente la valeur de la fonction objectif.

- La figure 6 montre les erreurs sur les paramètres de différents modèles. INI représente le modèle initial. CONVENTION_287 représente le modèle optimal (287ème modèle) avec l'optimisation conventionnelle. INVENTION_55 est le 55ème modèle dans l'optimisation avec le procédé selon l'invention. INVENTION_187 est le modèle optimal (187ème modèle) avec le procédé selon l'invention. L'axe X est le numéro de paramètre, et l'axe Y est l'erreur sur le paramètre (valeur de skin).

- La figure 7a montre les comparaisons de production d'huile au puits P2 de différents modèles. REF est la solution de référence, représentant les données mesurées. INI représente le modèle initial. CONVENTION_287 représente le modèle optimal (287ème modèle) avec l'optimisation conventionnelle. INVENTION_55 est le 55ème modèle dans l'optimisation avec le procédé selon l'invention. INVENTION_187 est le modèle optimal (187ème modèle) avec le procédé selon l'invention. L'axe X est le temps en jour. L'axe Y est la production d'huile en m$^3$/jour.

- La figure 7b montre les comparaisons de water-cut au puits P2 de différents modèles. L'axe X est le temps en jour. L'axe Y est water-cut sans unité.

- La figure 8a montre les comparaisons de production d'huile au puits P6 de différents modèles. L'axe X est le temps en jour. L'axe Y est la production d'huile en m$^3$/jour.

- La figure 8b montre les comparaisons de water-cut au puits P6. L'axe X est le temps en jour. L'axe Y est une donnée de water-cut, sans unité.

- La figure 9a montre les comparaisons de production d'huile au puits P12. L'axe X est le temps en jour. L'axe Y est la production d'huile en m$^3$/jour.

- La figure 9b montre les comparaisons de water-cut au puits P12. L'axe X est le temps en jour. L'axe Y est le water-cut sans unité.

- La figure 10 montre les comparaisons d'injection d'eau puits 16 de différents modèles. L'axe X est le temps en jour. L'axe Y est la production d'eau en m$^3$/jour.

- La figure 11 montre les comparaisons d'injection d'eau puits I12 de différents modèles. L'axe X est le temps en jour. L'axe Y est la production d'eau en m$^3$/jour.

- La figure 12 montre la comparaison de la fonction objectif pour la méthode conventionnelle (CONVENTION), la méthode selon l'invention utilisant la matrice de perturbations du tableau 2 (INVENTION_1) et la méthode selon l'invention utilisant la matrice de perturbations sélectionné (INVENTION_2).

**Description détaillée du procédé**

Le procédé (ou méthode) selon l'invention permet d'exploiter un réservoir pétrolier à partir d'un calage d'historique optimisé d'un modèle de réservoir. La calage d'historique est optimisé en ce qu'il permet de réduire significativement le nombre de simulations de réservoir, qui sont très coûteuses en temps CPU, ainsi que le temps passé dans une étude de réservoir.

Dans la présente invention, on propose de décomposer le calage par régions. Cette décomposition représente un partitionnement des données à caler. Les régions sont définies de telle sorte qu'une partie seulement des paramètres ait un impact significatif sur les données d'historique correspondant à chaque région. En procédant de la sorte, le calage peut être réalisé de façon relativement indépendante dans chaque région, tout en obtenant une amélioration globale. Le nombre de paramètres influents étant réduit par région, il est ainsi possible de limiter fortement le nombre de simulations nécessaires au calage. Pour assurer la cohérence du calage sur l'ensemble du réservoir, on associe une technique de perturbation de paramètres qui tient compte des interférences entre les régions. Le procédé comporte principalement quatre étapes :

1. on génère un modèle de réservoir initial et on choisit les paramètres à modifier pour améliorer ce modèle ;

2. on définit une fonction objectif globale pour le calage d'historique et on décompose cette fonction objectif en composantes locales par région, basées sur le partitionnement des données;

3. on planifie de façon optimale les simulations à réaliser, en perturbant les valeurs de paramètres, pour calculer les gradients de la fonction objectif ;

4. on construit un nouveau modèle de réservoir en modifiant les paramètres de façon à minimiser la fonction objectif par une procédure d'optimisation basée sur la méthode des gradients.

## 1- Génèration d'un modèle initial de réservoir

On commence par générer un modèle de réservoir initial, qui prend en compte différents aspects tels que la structure géologique, les propriétés pétrophysiques, les propriétés fluides, les puits, etc.

Un modèle de réservoir est constitué d'un ensemble de mailles, auxquelles sont affectées des valeurs d'au moins $M$ paramètres issues de mesures au sein du réservoir pétrolier. Les paramètres, qui sont utilisés pour décrire la structure, la pétrophysique, etc., sont estimés en utilisant des données statiques. Certains paramètres ont de grandes incertitudes et peuvent être éloignés de la réalité. Néanmoins, nous pouvons utiliser les données dynamiques telles que les données de production ou de sismique 4D pour réduire les incertitudes et améliorer la caractérisation de ces paramètres via la procédure de calage d'historique. Dans cette étape, nous choisissons tous les paramètres potentiels à modifier pour améliorer le modèle de réservoir. La génération d'un modèle de réservoir initial est bien connue des spécialistes.

## 2- Définition et décomposition d'une fonction objectif globale

La fonction objectif globale, qui mesure des écarts entre des valeurs de données d'historique mesurées et des valeurs de données d'historique simulées au moyen du modèle de réservoir, est généralement donnée par la formule suivante :

$$F(\lambda) = \frac{1}{2} \sum_{i=1}^{Nwell} \omega_{p,i} \frac{1}{N_{time}(i)} \sum_{n=1}^{N_{time}(i)} \left( \frac{P_{i,n}^{obs} - P_{i,n}^{sim}(\lambda)}{\sigma_p(i)} \right)^2$$

$$+ \frac{1}{2} \sum_{j=1}^{Nzone} \omega_{s,j} \frac{1}{N_{time}(j)} \sum_{n=1}^{N_{time}(j)} \left( \frac{S_{j,n}^{obs} - S_{j,n}^{sim}(\lambda)}{\sigma_s(j)} \right)^2 \, .$$

où

$N_{well}$ est le nombre de puits

$N_{zone}$ est le nombre de zone sismiques 4D,

$P^{obs}$ est l'ensemble des données de production observées,

$P^{sim}$ est l'ensemble des données de production simulées avec le modèle,

$S^{obs}$ représente les données de sismique 4D observées,

$S^{sim}$ représente les données de sismique 4D simulées avec le modèle,

$\omega_p$ sont les poids associés aux données de production,

$\omega_s$ sont les poids associés aux données sismiques 4D,

$\sigma_p(i)$ est l'intervalle de confiance sur les données de production au puits $i$,

$\sigma_s(j)$ est l'intervalle de confiance sur les données sismiques à la zone $j$,

$N_{time}$ représente le nombre de point en temps pour effectuer les mesures,

$\lambda = (\lambda_1, \lambda_2, ..., \lambda_M)$ sont les M paramètres à optimiser.

Les données de production peuvent être choisies parmi les données suivantes : production d'huile, production de gaz, production d'eau de puits, ratio gaz/huile (GOR), proportion d'eau de production, pression, température, composition des hydrocarbures. Cette liste n'est bien sur non exhaustive.

Les paramètres peuvent être choisis parmi les paramètres suivants : propriétés pétrophysiques telles que perméabilité, porosité, perméabilités relatives et pressions capillaires, propriétés pétroélastiques, distribution spatiale de faciès, endommagement autour de puits, indice de connectivité de puits, connexion ou rejets de failles, paramètres structuraux. Cette liste n'est bien sur non exhaustive.

Cette fonction objectif globale peut être directement décomposée sur le partitionnement des données par région sous la forme suivante :

$$F(\lambda_1,...,\lambda_M) = \sum_{k=1}^{Nreg} F_k(\lambda_1,...,\lambda_M)$$

où $F_k(\lambda_1 ..., \lambda_M)$ est une composante (fonction objectif locale) qui estime les écarts entre les données observées et les données simulées sur les puits et les zones sismiques 4D dans la région $k$ ($k = 1, ..., N_{reg}$), et $N_{reg}$ est le nombre de régions. A noter que la fonction objectif locale dépend théoriquement toujours de $M$ paramètres, mais les sensibilités de ces paramètres sur chaque fonction objectif locale peuvent être très différentes. Nous pouvons ainsi réduire, par une analyse de sensibilité par exemple, le nombre de paramètres principaux (significatifs) pour les fonctions objectif locales.

Ainsi, en partitionnant convenablement les composantes de la fonction objectif, c'est-à-dire en définissant convenablement les régions, et les paramètres par régions, nous pouvons réduire au minimum le nombre de paramètres principaux pour les fonctions objectif locales.

Notons que le principe de partitionnement de la fonction objectif, illustré ci-dessus avec une fonction objectif de type "moindres carrés", peut être généralisé à d'autres types de formulation.

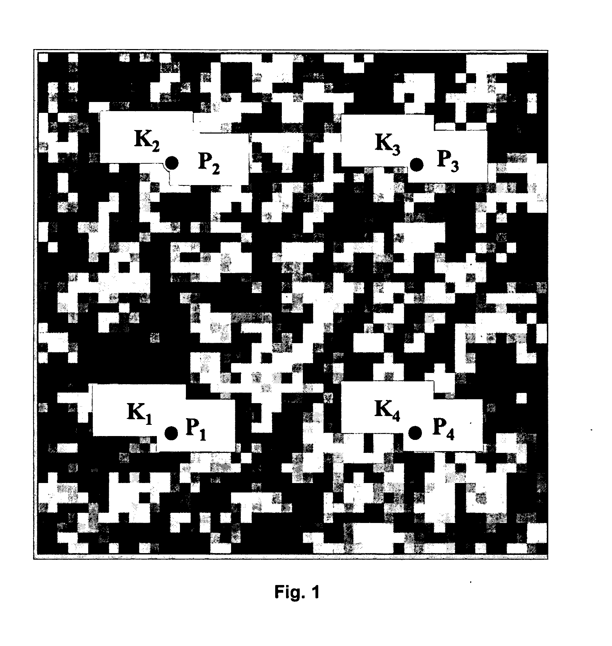

Cette méthode peut être illustrée sur un exemple de réservoir hétérogène comportant 4 puits producteurs (figure 1). Nous supposons sur ce cas avoir une grande incertitude sur les perméabilités. Les productions de ces 4 puits producteurs $P_1, P_2, P_3$ et $P_4$ dépendent, bien entendu, des valeurs des perméabilités du champ. Nous voulons modifier les valeurs des perméabilités (ou des multiplicateurs de perméabilités) $K_1, K_2, K_3$ et $K_4$ autour de ces 4 puits par minimisation de la fonction objectif pour améliorer le modèle. Sur cet exemple, nous pouvons décomposer la fonction objectif par puits de la façon suivante :

$$F(K_1,K_2,K_3,K_4) = \sum_{k=1}^{4} F_k(K_1,K_2,K_3,K_4)$$

où $F_k(K_1,K_2,K_3,K_4)$ correspond aux écarts entre données de production observées et simulées pour le puits $P_k$ ($K = 1, 2, 3, 4$). La production du puits $P_1$ dépend principalement de la valeur du paramètre $K_1$, et les impacts des autres paramètres ($K_2, K_3$ et $K_4$) sur la production du $P_1$ sont très faibles. La dépendance des paramètres sur la fonction objectif locale $F_1$ peut être approchée par :

$$F_1(K_1,K_2,K_3,K_4) \approx F_1(K_1)$$

De même, nous avons,

$$F_2(K_1,K_2,K_3,K_4) \approx F_2(K_2)$$

$$F_3(K_1, K_2, K_3, K_4) \approx F_3(K_3)$$

$$F_4(K_1, K_2, K_3, K_4) \approx F_4(K_4)$$

Dans les cas plus complexes, les dépendances de paramètres peuvent être déterminées par une analyse de sensibilité. Cette technique est bien connue des spécialistes, un exemple est décrit dans le document suivant :

A. Saltelli, S. Tarantola, F. Campolongo. Sensitivity Analysis in Practice : A Guide to Assessing Scientific Models. Wiley, 2004

Ainsi, la décomposition de la fonction objectif globale selon l'invention conduit à ce que chaque composante (fonction objectif locale) dépende du plus petit nombre possible de paramètres :

$$F_k(\lambda_1, \lambda_2, ..., \lambda_M) \approx F_k(\lambda_{k,1}, \lambda_{k,2}, ..., \lambda_{k,m_k})$$

avec $m_k$ le plus petit possible *(k = 1, ..., $N_{reg}$)*. Soit $M_m = max(m_1, ..., m_M)$, la valeur maximum parmi $m_1, ..., m_{Nreg}$, l'objectif de cette étape est de chercher une décomposition de la fonction objectif telle que $M_m$ soit le plus petit possible avec $M_m < M$.

Ainsi, au cours de cette étape, on décompose la fonction objectif globale en une somme de $k$ fonctions objectifs locales définies en fonction de $m_k$ paramètres choisis parmi les $M$ paramètres. Chaque fonction objectif locale mesure les écarts de simulation sur une région géographique donnée. Ces régions sont choisies en minimisant le nombre $m_k$ de paramètres ayant une influence sur les données d'historique.

**3- Planification des perturbations et calcul des dérivées**

Selon l'invention, la procédure d'optimisation, pour modifier des valeurs de paramètres, est basée sur le calcul de gradients (les dérivées partielles). Les dérivées $D_i F = \dfrac{\partial F}{\partial \lambda_i}$ de la fonction objectif $F(\lambda_1, ..., \lambda_i, ..., \lambda_M)$ par rapport aux paramètres $\lambda_i$ (i = 1, ..., M) sont calculées au moyen d'une technique de perturbation de paramètres, au cours de laquelle on évalue M+1 valeurs de la fonction objectif. Par exemple, la dérivée $D_i F = \dfrac{\partial F}{\partial \lambda_i}$ peut être calculée par :

$$D_i F(\lambda_1, ..., \lambda_i, ..., \lambda_M) \approx \frac{F(\lambda_1, ..., \lambda_i + \Delta\lambda_i, ..., \lambda_M) - F(\lambda_1, ..., \lambda_i, ..., \lambda_M)}{\Delta\lambda_i}$$

$$(i = 1, ..., M)$$

Pour connaître toutes les M dérivées, il faut évaluer la fonction objectif F sur le point initial $(\lambda_1 ..., \lambda_M)$ et pour M points perturbés $(\lambda_1, ..., \lambda_i + \Delta\lambda_i, ..., \lambda_M)$ pour i = 1, ..., M, c'est-à-dire, faire M+1 simulations de réservoir. Or la simulation de réservoir est très coûteuse en temps CPU.

De même, pour une fonction objectif locale $F_k$ (k = 1, ..., $N_{reg}$), nous avons besoin de $m_k$ perturbations (ou $m_k$+1 simulations) pour calculer ses dérivées. Si $M_m < M$, c'est-à-dire, $m_k < M$ pour toutes les fonctions objectif locales (k = 1, ..., $N_{reg}$), nous pouvons calculer les dérivées de la fonction objectif (globale) avec moins de simulations ($M_m$+1 simulations) que l'approche conventionnelle (M+1 simulations) en utilisant une planification optimale.

Selon la formule de la décomposition de la fonction objectif, la dérivée de la fonction objectif globale peut être calculée par la somme des dérivées des fonctions objectifs locales :

$$D_i F(\lambda_1,...,\lambda_M) = \sum_{k=1}^{Nreg} D_i F_k(\lambda_1,...,\lambda_M) \approx \sum_{k=1}^{Nreg} D_i F_k(\lambda_{k,1},...,\lambda_{k,m_k})$$

La planification des perturbations, pour une fonction objectif locale donnée, consiste à définir les variations à appliquer aux différents paramètres de la fonction objectif locale de façon à pouvoir calculer ses dérivées par rapport à tous ses paramètres.

Pour réaliser cette planification, on construit une matrice, appelée matrice de perturbations. Cette matrice contient autant de colonnes que de paramètres utilisés pour définir la fonction objectif globale, et autant de lignes que de perturbations à réaliser. Chaque case de la matrice comporte la variation du paramètre à réaliser. Cette variation est également appelée « pas de perturbation » et est notée $a_{ij}$. Ainsi, dans le tableau 1, qui correspond à une matrice de perturbations, $a_{ij}$ correspond à la variation du paramètre $\lambda_j$ pour la perturbation i, L étant le nombre de perturbations.

Tableau 1 a - Planification des perturbations

| perturbation | $\lambda_1$ | $\lambda_2$ | $\lambda_3$ | $\lambda_4$ | ... | $\lambda_M$ |
|---|---|---|---|---|---|---|
| 1 | $a_{11}$ | $a_{12}$ | $a_{13}$ | $a_{14}$ | | $a_{1M}$ |
| 2 | $a_{21}$ | $a_{22}$ | $a_{23}$ | $a_{24}$ | | $a_{2M}$ |
| 3 | $a_{31}$ | $a_{32}$ | $a_{33}$ | $a_{34}$ | | $a_{3M}$ |
| ... | | | | | | |
| L | $a_{L1}$ | $a_{L2}$ | $a_{L3}$ | $a_{L4}$ | | $a_{LM}$ |

Une planification classique correspond à L = M, $a_{ij}$ = 0 (si $i \neq j$) et $a_{ij} = \Delta\lambda_i$ (i=1, ..., L ; j = 1, ..., M) :

Tableau 1b - Planification des perturbations classique

| perturbation | $\lambda_1$ | $\lambda_2$ | $\lambda_3$ | $\lambda_4$ | ... | $\lambda_M$ |
|---|---|---|---|---|---|---|
| 1 | $\Delta\lambda_1$ | 0 | 0 | 0 | | 0 |
| 2 | 0 | $\Delta\lambda_2$ | 0 | 0 | | 0 |
| 3 | 0 | 0 | $\Delta\lambda_3$ | 0 | | 0 |
| ... | | | | | | |
| L (=M) | 0 | 0 | 0 | 0 | | $\Delta\lambda_M$ |

Il faut donc, dans un cas classique, réaliser L (L=M) perturbations, pour appliquer une variation indépendamment à chaque paramètre, et pouvoir ainsi calculer les M dérivées de la fonction objectif locale.

Planification des perturbations

Selon l'invention, on applique une technique de planification des perturbations dans laquelle on applique une variation à plusieurs paramètres en même temps, de façon à minimiser le nombre de perturbations (nombre de lignes de la matrice de perturbation) tout en permettant de calculer les M dérivées de la fonction objectif locale.

Pour ce faire, on étudie le nombre minimum de perturbations et les pas des perturbations $a_{ij}$ nécessaires au calcul des dérivées d'une fonction objectif locale. Nous prenons un exemple dont la fonction objectif locale $F_1$ a 3 paramètres principaux. Sans perte de généralité, nous supposons que les 3 paramètres principaux de la fonction objectif locale $F_1$ sont $\lambda_1$, $\lambda_2$ et $\lambda_3$. Soit $(\lambda_1^0, \lambda_2^0, \lambda_3^0)$ le point initial, en utilisant le développement de Taylor, la fonction objectif locale $F_1$ correspondant à la perturbation i peut s'exprimer par :

$$F_1(\lambda_1^0 + a_{i1}, \lambda_2^0 + a_{i2}, \lambda_3^0 + a_{i3}) \approx F_1(\lambda_1^0, \lambda_2^0, \lambda_3^0) + \sum_{j=1}^{3} D_j F_1(\lambda_1^0, \lambda_2^0, \lambda_3^0) a_{ij}$$

$$(i = 1, ..., L)$$

Dans le système ci-dessus, $D_j F_1$ (j = 1, 2, 3) sont inconnues, et tous les autres termes sont connus en utilisant les simulations de réservoir sur le point initial $(\lambda_1^0, \lambda_2^0, \lambda_3^0)$ et les points perturbés

$(\lambda_1^0 + a_{i1}, \lambda_2^0 + a_{i2}, \lambda_3^0 + a_{i3})$ (j = 1, ..., L). Pour calculer les dérivées $D_j F_1$ (j = 1, 2, 3), nous considérons le système d'équations suivant :

$$\sum_{j=1}^{3} a_{ij} D_j F_1 = F_1(\lambda_1^0 + a_{i1}, \lambda_2^0 + a_{i2}, \lambda_3^0 + a_{i3}) - F_1(\lambda_1^0, \lambda_2^0, \lambda_3^0)$$

$$(i = 1, ..., L)$$

Il existe une infinité de solutions si le nombre de perturbations est inférieur au nombre de paramètres qui est fixé à 3 dans cet exemple. Il faut donc au minimum 3 perturbations, et les coefficients $a_{ij}$ des perturbations doivent vérifier que le rang de la matrice $C = \begin{pmatrix} a_{11} & a_{12} & a_{13} \\ a_{21} & a_{22} & a_{23} \\ \vdots & \vdots & \vdots \\ a_{L1} & a_{L2} & a_{L3} \end{pmatrix}$ est 3. Cette matrice est appelée la matrice de perturbation de la fonction objectif locale $F_1$.

Nous pouvons utiliser différents pas de perturbations $a_{ij}$ pour le même paramètre $\lambda_j$ dans différentes perturbations i (i = 1, ..., L), afin que le rang de C soit égale au nombre de paramètres $m_k$.
Il est important de minimiser le nombre de perturbations L. Pour chaque fonction objectif locale, il est possible d'utiliser seulement $m_k$ perturbations pour calculer ses dérivées. L'objectif de cette étape est d'arranger les coefficients des perturbations pour minimiser le nombre de perturbations L. En particulier, nous souhaitons avoir L = $M_m$.

Calcul des dérivées

Pour calculer les dérivées $D_j F_1$ (j = 1, 2, 3) dans l'exemple précédent, on résout le problème de minimisation suivant: L 3 trouver ($x_1$, $x_2$, $x_3$) tel que la fonction $G(x_1, x_2, x_3) = \sum_{i=1}^{L}(\sum_{j=1}^{3} a_{ij} x_j - b_i)^2$ avec

$b_i = F_1(\lambda_1^0 + a_{i1}, \lambda_2^0 + a_{i2}, \lambda_3^0 + a_{i3}) - F_1(\lambda_1^0, \lambda_2^0, \lambda_3^0)$ (i = 1, 2, 3) atteigne le minimum.

Les $x_1$, $x_2$, $x_3$ correspondent aux dérivées $D_j F_1$ (j = 1, 2, 3) que l'on souhaite calculer.
D'une manière générale, pour déterminer les dérivées de la fonction objectif locale $F_k$ qui dépend de $m_k$ paramètres principaux, il faut au moins $m_k$ perturbations et le rang de la matrice de perturbation de $F_k$ est $m_k$. Soit C la matrice de perturbation de la fonction objectif $F_k$, C est une matrice de L lignes et $m_k$ colonnes avec $L \geq m_k$. Le rang de C doit être $m_k$, et les dérivées de la fonction objectif locale $F_k$ peuvent être calculées en résolvant le problème de minimisation suivant :

$$\text{Trouver } (x_1,...,x_{m_k}) \text{ tels que la fonction } G(x_1,...,x_{m_k}) = \sum_{i=1}^{L}(\sum_{j=1}^{m_k} c_{ij} x_j - b_i)^2$$

soit minimale, où $c_{ij}$ ($i = 1, ..., L$ ; $j = 1, ..., m_k$) sont les coefficients de la matrice de perturbation C, $b_i = F_k(P_i)-F_k(P_0)$ ($i = 1, ..., L$) avec $P_0$ le point initial et $P_i$ le point correspondant à la perturbation i.

Ainsi, on estime les dérivées des fonctions objectif locales par rapport aux paramètres $m_k$, au moyen d'une technique de perturbation de paramètres au cours de laquelle on évalue R valeurs de la fonction objectif locale. La valeur de R est diminuée en construisant pour chaque fonction objectif une matrice de perturbations ayant un rang égal au nombre de paramètres $m_k$ de la fonction objectif locale.

Dans l'exemple de réservoir hétérogène avec 4 puits, nous pouvons utiliser une perturbation (2 simulations) au lieu de 4 perturbations (5 simulations) pour calculer toutes les dérivées.

Selon un mode de réalisation, on peut déterminer les coefficients de la matrice de perturbations (tableau 1a), en appliquant la méthode suivante :

    i. on réduit le nombre de coefficients à générer
    ii. on génère les coefficients d'une première matrice de perturbations
    iii. on estime une erreur sur le calcul de dérivées de cette matrice
    iv. on génère au moins une autre matrice de perturbations minimisant cette erreur

<u>i. On réduit le nombre de coefficients à générer</u>

La matrice de perturbations, noté A, est utilisé pour calculer les dérivées. Plus la taille de la matrice de perturbations est grande, plus il est probable d'avoir des mauvais calculs de dérivées pour certaines fonctions objectif locales. Pour mieux contrôler les coefficients, nous proposons d'utiliser une technique de "coloriage graphique", qui peut réduire le nombre de coefficients à générer. Cette technique permet donc de réduire la probabilité de mauvais calculs de dérivées dans les fonctions objectif locales.

Selon la technique de coloriage graphique, un graphe est décrit par des sommets et des arêtes. Deux sommets sont considérés comme voisins s'il y a une arête pour relier ces deux sommets. La méthode de coloriage graphique consiste à colorer les sommets avec un minimum de couleurs, de façon à ce que la couleur d'un sommet soit toujours différente par rapport à ses voisins. Une application de la méthode de coloriage graphique dans l'optimisation est de compresser les matrices creuses pour évaluer les éléments non-nuls. Le document suivant décrit cette technique :

    - Shahadat Hossain et Trond Steihaug, "Computing a Sparse Jacobian Matrix by Rows and Columns", Optimization Methods and Software, vol.10, pp33-48, 1998.

Dans le cadre de l'invention, on utilise la méthode de coloriage graphique pour réduire le nombre de coefficient de la matrice de perturbations. Dans notre graphe, chaque paramètre est considéré comme un sommet. Si deux paramètres interviennent comme des paramètres principaux dans une même fonction objectif locale, ils sont considérés comme des voisins et il y a une arête pour relier ces deux paramètres (sommets). Nous appliquons une méthode de coloriage graphique pour colorier ce graphe de paramètre.

Si deux paramètres ont une même couleur, les coefficients sont identiques pour ces deux paramètres dans la même perturbation (la même ligne de la matrice de perturbations). Autrement dit, les colonnes sont identiques pour les paramètres ayant la même couleur dans la matrice de perturbations. Par exemple, si les paramètres $x_1$, $x_3$ et $x_8$ ont la même couleur, alors, on a $a_{i1} = a_{i3} = a_{i8}$ pour $i = 1, ..., L$ dans la matrice de planification, ce qui réduit le nombre de coefficients à générer.

Soit $M_c$ le nombre de couleurs pour les paramètres, nous avons toujours $M_c \le M$. Nous générons une matrice coloriée $\tilde{A}$ de $L=M_m$ lignes et $M_c$ colonnes. Par définition de $M_m$, on sait qu'il existe au moins une composante locale ayant $M_m$ paramètres. On a donc $M_c \ge M_m$, puisqu'on a toujours un paramètre qui a au moins $M_{c-1}$ voisins. La matrice coloriée $\tilde{A}$ est donc générée par :

$$\widetilde{A} = \begin{pmatrix} 1 & 0 & \cdots & 0 & \widetilde{a}_{11} & \cdots & \widetilde{a}_{1(M_c - M_m)} \\ 0 & 1 & \cdots & 0 & \widetilde{a}_{21} & \cdots & \widetilde{a}_{2(M_c - M_m)} \\ \vdots & \vdots & \ddots & \vdots & \vdots & \ddots & \vdots \\ 0 & 0 & \cdots & 1 & \widetilde{a}_{M_m 1} & \cdots & \widetilde{a}_{M_m(M_c - M_m)} \end{pmatrix}$$

où $\widetilde{A}$ est composée d'une matrice d'identité et une matrice arbitraire de $M_m$ lignes et $M_c$-$M_m$ colonnes. Le nombre de coefficients à générer est réduit de $M_m x M$ à $M_m(M_c - M_m)$. Une fois $\widetilde{A}$ générée, nous utilisons ses colonnes pour remplir la matrice de perturbations $A$.

<u>ii. On génère les coefficients d'une première matrice de perturbations</u>

Selon un mode de réalisation, les coefficients de la matrice de perturbations sont choisis aléatoirement.

<u>iii. On estime une erreur sur le calcul de dérivées de cette matrice</u>

Les erreurs sur le calcul de dérivées sont directement liées à la matrice de perturbations A. Pour évaluer les erreurs potentielles dans le calcul de dérivée, nous utilisons une fonction de test. Par exemple, nous pouvons utiliser un polynôme de second ordre du type :

$$H_m(x_1,...,x_m) = \sum_{j=1}^{m} \sum_{i=1}^{m} x_i \, x_j \; .$$

Pour chaque fonction objectif locale $F_k$, nous calculons, en utilisant la matrice de perturbations A, les dérivées

de $H_{mk}(\lambda_{k,1}, \lambda_{k,2}, ..., \lambda_{k,m_k}) = \sum_{j=1}^{m_k} \sum_{i=1}^{m_k} \lambda_{k,i} \lambda_{k,j}$ au lieu de $F_k(\lambda_{k,1}, \lambda_{k,2}, ..., \lambda_{k,mk})$. Les dérivées analytiques de la fonction de test $H_{mk}$ sont connues. Au point $\lambda_{k,1} = \lambda_{k,2} = ... = \lambda_{k,mk} = 1$, toutes les dérivées sont égales à $2m_k$. Nous estimons ainsi l'erreur des dérivées numériques pour la composante $F_k$ par la formule suivante :

$$\varepsilon_k = \sum_{j=1}^{m_k} (D_j H_{mk} - 2m_k)^2$$

où $D_j H_{mk}$ est la dérivée numérique de $H_{mk}$ part rapport au paramètre $\lambda_{k,j}$ ($j = 1, ..., m_k$) calculée avec la matrice de perturbations A au point $\lambda_{k,1} = \lambda_{k,2} = ... = \lambda_{k,mk} = 1$.
L'erreur totale de la matrice de perturbations A est estimée par

$$\varepsilon_{tot} = \sum_{k=1}^{N_{reg}} \varepsilon_k$$

puisque nous avons $N_{reg}$ fonctions objectif locales. La meilleure matrice de perturbations est celle qui donne la plus petite erreur.
<u>iv. On génère au moins une autre matrice de perturbations minimisant cette erreur</u>
Selon un mode réalisation, on génère plusieurs matrices de perturbations, c'est-à-dire plusieurs jeu de coefficients, au moyen d'une optimisation pour minimiser l'erreur de la matrice de perturbations.

En particulier, on peut générer plusieurs matrices de perturbations et sélectionner la matrice ayant la plus petite erreur.

## 4- Construction du nouveau modèle par optimisation

Le modèle de réservoir initial est ainsi mis à jour en modifiant les paramètres de ce modèle. Les nouveaux paramètres étant ceux qui minimisent la fonction objectif globale. Plusieurs méthodes d'optimisation basées sur le calcul de gradients sont disponibles (voir D. Sinoquet et F. Delbos :"Adapted Nonlinear Optimization Method for Production Data and 4D Seismic Inversion", proceeding of European Conference on Mathematics of Oil Recovery, Bergen, Norvège, 8-11 Sept. 2008) pour le calage d'historique.

Nous pouvons mettre en oeuvre une méthode d'optimisation en utilisant la décomposition de la fonction objectif et la planification de perturbations décrites dans les étapes précédentes pour minimiser la fonction objectif (globale) en modifiant les paramètres. Nous pouvons ainsi obtenir un nouveau modèle de réservoir avec les paramètres optimaux qui minimisent la fonction objectif.

Le modèle ainsi calé aux données d'historique permet une optimisation de l'exploitation du réservoir pétrolier. Ce modèle permet de déterminer de façon plus précise et plus rapide de nombreux paramètres techniques relatifs à la recherche, l'étude ou l'exploitation d'un réservoir, d'hydrocarbures par exemple. On peut ainsi par exemple déterminer quelles zones ont le plus de chances de contenir des hydrocarbures, les zones dans lesquelles il peut être intéressant/nécessaire de forer un puits d'injection pour améliorer la récupération des hydrocarbures, le type d'outils à utiliser, les propriétés des fluides utilisés et récupérés....

## Exemple d'application

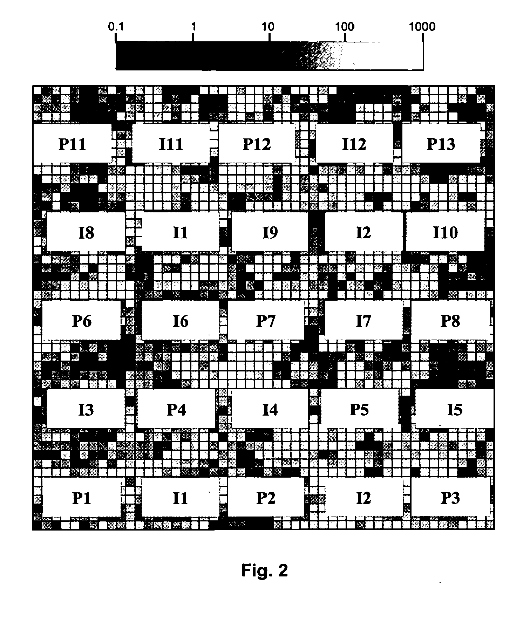

Soit un réservoir hétérogène de taille 2500 m dans la direction x, 2500 m dans la direction y et 10 m dans la direction z. Ce réservoir est maillé avec 50 mailles dans la direction x et 50 mailles dans la direction y, et ses perméabilités (K) sont présentées sur la figure 2. Vingt cinq puits sont forés dans ce réservoir dont douze puits injecteurs et treize puits producteurs. La pression initiale du réservoir est 250 bars. Les puits fonctionnent à pressions imposées avec 320 bars aux puits injecteurs et 180 bars aux producteurs. Les skins (les endommagements ou améliorations de perméabilités autour du puits) sont nuls pour tous les puits. Un historique de 4000 jours est disponible. Les données de production mesurées sont : les débits d'huile aux 13 puits producteurs, le débit d'eau aux 12 puits injecteurs et les water-cuts aux 13 puits producteurs.

La fonction objectif globale, qui mesure les écarts entre les données d'historique simulées et les données d'historique mesurées, est définie de la façon suivante :

$$F(\lambda) = \frac{1}{2}(\sum_{i=1}^{Nprod} \frac{1}{N_{time}} \sum_{n=1}^{N_{time}} (\frac{Q_{o,i,n}^{obs} - Q_{o,i,n}^{sim}(\lambda)}{\sigma_o(i)})^2 +$$

$$\sum_{i=1}^{Nprod} \frac{1}{N_{time}} \sum_{n=1}^{N_{time}} (\frac{FW_{i,n}^{obs} - FW_{i,n}^{sim}(\lambda)}{\sigma_{fw}(i)})^2 +$$

$$\sum_{i=1}^{Ninj} \frac{1}{N_{time}} \sum_{n=1}^{N_{time}} (\frac{Q_{w,i,n}^{obs} - Q_{w,i,n}^{sim}(\lambda)}{\sigma_w(i)})^2 )$$

où $N_{prod}$ = 13 est le nombre de puits producteurs,
$N_{inj}$ = 12 est le nombre d'injecteurs,
$N_{time}$ = 40 est le nombre de points mesurés avec une mesure tous les 100 jours,
$Q_o$ est le débit d'huile aux producteurs,
$Q_w$ est le débit d'eau aux injecteurs,
FW est le water-cut,

$\sigma_o$, $\sigma_{fw}$, et $\sigma_w$, qui sont les intervalles de confiance pour le débit d'huile, le water-cut et le débit d'eau, ont été calculés en fonction de la moyenne et la variance des données à chaque puits sur cet exemple,

$\lambda = (\lambda_{P1}, ..., \lambda_{P13}, \lambda_{I1}, ..., \lambda_{I12})$ correspond aux valeurs de skins aux puits, les premières valeurs $\lambda_{P1}, ..., \lambda_{P13}$ étant attachées aux treize puits producteurs et $\lambda_{I1}, ..., \lambda_{I12}$ aux douze puits injecteurs.

Cette fonction objectif globale est décomposée en vingt cinq fonctions objectifs locales, liées aux producteurs et aux injecteurs :

$$F(\lambda_{P1},...,\lambda_{P13},\lambda_{I1},...,\lambda_{I12}) = \sum_{k=1}^{25} F_k(\lambda_{P1},...,\lambda_{P13},\lambda_{I1},...,\lambda_{I12})$$

avec

$$F_k(\lambda_{P1},...,\lambda_{P13},\lambda_{I1},...,\lambda_{I12}) =$$

$$\frac{1}{2}\frac{1}{N_{time}} \sum_{n=1}^{N_{time}} ((\frac{Q_{o,k,n}^{obs} - Q_{o,k,n}^{sim}}{\sigma_o(i)})^2 + (\frac{FW_{k,n}^{obs} - FW_{k,n}^{sim}}{\sigma_{fw}(i)})^2)$$

(k = 1, ..., 13) correspondant aux 13 producteurs, et

$$F_k(\lambda_{P1},...,\lambda_{P13},\lambda_{I1},...,\lambda_{I12}) = \frac{1}{2}\frac{1}{N_{time}} \sum_{n=1}^{N_{time}} (\frac{Q_{w,k-13,n}^{obs} - Q_{w,k-13,n}^{sim}}{\sigma_w(i)})^2 \quad \text{(k = 14,}$$

..., 25)

correspondant aux 12 puits injecteurs.

Dans la construction du modèle de réservoir initial, nous ne connaissons pas les véritables valeurs des skins. Nous adoptons d'abord des valeurs initiales de skins estimées à 10 pour tous les puits. Nous supposons que les valeurs possibles de skins sont comprises dans un intervalle entre 0 et 20.

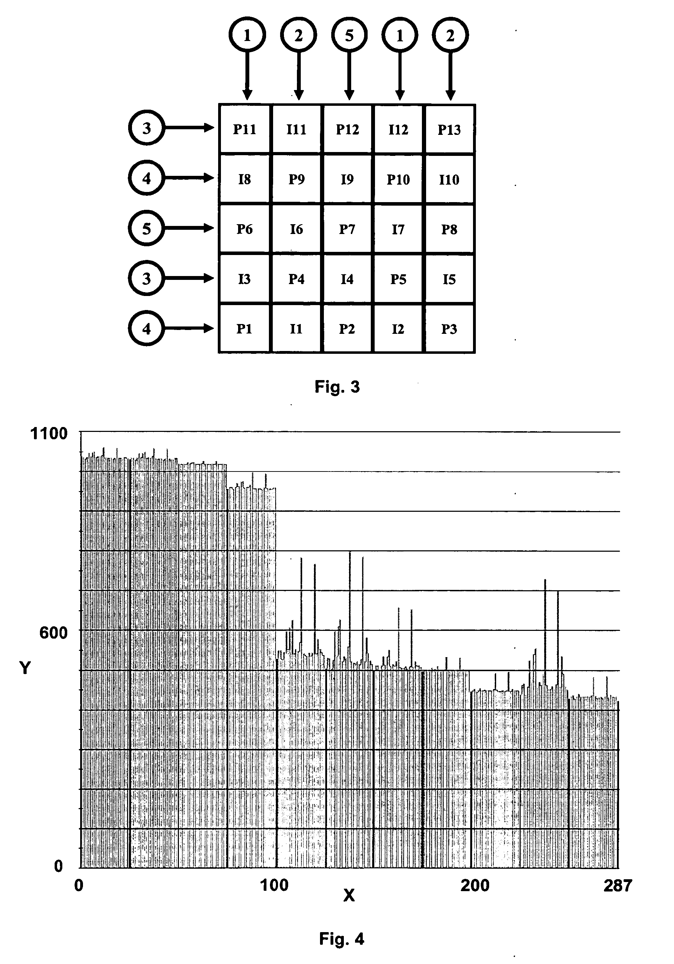

La localisation des puits dans ce réservoir (figure 2) nous montre que le skin d'un puits injecteur a un fort impact uniquement sur le puits lui-même et sur les producteurs environnants (maximum 4 producteurs), et son impact sur les autres puits doit être relativement faible. De même, le skin d'un puits producteur a un fort impact seulement sur le puits lui-même et sur les injecteurs environnants, et peu d'impact sur les autres puits. Donc, pour chaque fonction objectif locale, nous avons au maximum 5 paramètres principaux (le skin sur le puits considéré dans la fonction objectif locale et les skins sur les puits voisins). Les perturbations à réaliser sur les paramètres, qui doivent garantir le rang de la matrice de perturbation de chaque fonction objectif locale égale au nombre de paramètres principaux de cette fonction objectif locale, peuvent être planifiées de la façon suivante (figure 3) :

Perturbation 1 : on perturbe les puits dans les colonnes 1 et 4;

Perturbation 2 : on perturbe les puits dans les colonnes 2 et 5;

Perturbation 3 : on perturbe les puits dans les lignes 1 et 4;

Perturbation 4 : on perturbe les puits dans les lignes 2 et 5;

Perturbation 5 : on perturbe les puits dans la ligne 3 et la colonne 3;

Ces perturbations sont résumées dans le Tableau 2. Les cellules avec une croix correspondent aux perturbations avec des coefficients non nuls. Les cellules non remplies signifient qu'il n'y a pas de perturbation pour les paramètres correspondants, ce qui se traduit par des coefficients nuls pour ces cellules.

## Tableau 2 - Plan de perturbations

| pertur-bation | $\lambda_{P1}$ | $\lambda_{P2}$ | $\lambda_{P3}$ | $\lambda_{P4}$ | $\lambda_{P5}$ | $\lambda_{P6}$ | $\lambda_{P7}$ | $\lambda_{P8}$ | $\lambda_{P9}$ | $\lambda_{P10}$ | $\lambda_{P11}$ | $\lambda_{P12}$ | $\lambda_{P13}$ | $\lambda_{I1}$ | $\lambda_{I2}$ | $\lambda_{I3}$ | $\lambda_{I4}$ | $\lambda_{I5}$ | $\lambda_{I6}$ | $\lambda_{I7}$ | $\lambda_{I8}$ | $\lambda_{I9}$ | $\lambda_{I10}$ | $\lambda_{I11}$ | $\lambda_{I12}$ |
|---|---|---|---|---|---|---|---|---|---|---|---|---|---|---|---|---|---|---|---|---|---|---|---|---|---|
| 1 | X |  |  |  | X | X |  |  | X | X |  |  |  |  | X | X |  |  | X | X |  |  |  |  | X |
| 2 |  |  | X | X |  |  | X | X |  |  |  | X | X |  |  |  |  | X | X |  |  |  | X | X |  |
| 3 |  |  |  | X | X |  |  |  | X | X | X |  |  |  | X | X | X |  |  |  |  |  |  | X | X |
| 4 | X | X | X |  |  |  |  | X | X |  |  |  |  | X | X |  |  |  |  | X | X | X |  |  |  |
| 5 |  | X |  |  |  | X | X | X |  |  | X |  |  |  |  |  | X |  | X | X |  | X |  |  |  |

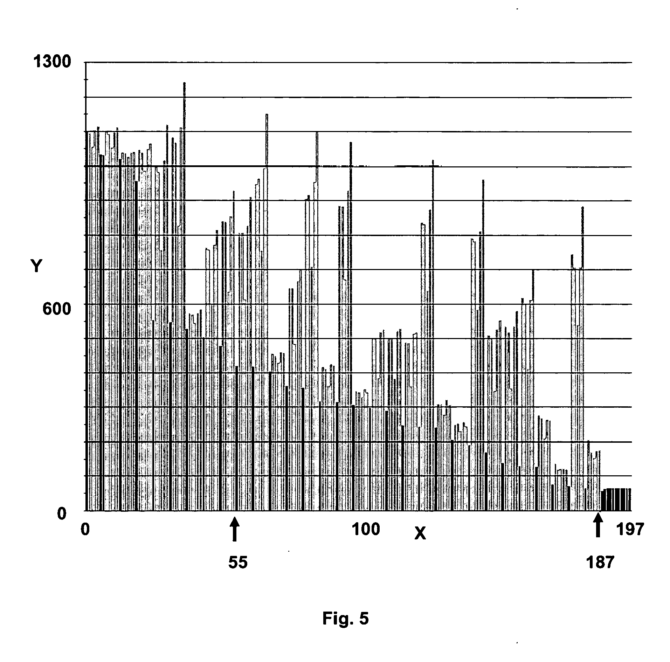

La fonction objectif globale est minimisée en utilisant une procédure d'optimisation basée sur la méthode des gradients pour optimiser les 25 paramètres. La valeur de fonction objectif pour le modèle initial est 1031. La variation de la fonction objectif avec l'approche conventionnelle, qui calcule les dérivées avec 25 perturbations, est illustrée dans la figure 4. L'axe X correspond au nombre de simulations. Au total, 287 simulations sont effectuées, et la fonction objectif optimale est 422 pour la 287$^{\text{ième}}$ simulation (on note ce modèle par CONVENTION_287). La fonction objectif en fonction du nombre de simulations avec la méthode proposée dans cette invention est illustrée dans la figure 5. Au total, 197 simulations sont effectuées, et la valeur minimum de 54 est obtenue pour la 187$^{\text{ième}}$ simulation (on note ce modèle par INVENTION_187). Nous notons aussi que la fonction objectif est réduite à 418 à la 55$^{\text{ième}}$ simulations (on note ce modèle par INVENTION_55), ce qui signifie que nous pouvons obtenir un modèle de qualité identique (mêmes valeurs de fonctions objectifs) par rapport au modèle optimal obtenu avec l'approche conventionnelle (CONVENTION_287) avec 5 fois moins de simulations. Ce résultat est cohérent avec l'analyse théorique, car nous utilisons 5 perturbations au lieu de 25 pour l'approche conventionnelle et nous réduisons d'un facteur 5 le nombre de perturbations (simulations) pour le calcul des dérivées. Avec la méthode proposée, le gain en temps CPU et en temps ingénieur consacré à l'étude d'un réservoir est conséquent.

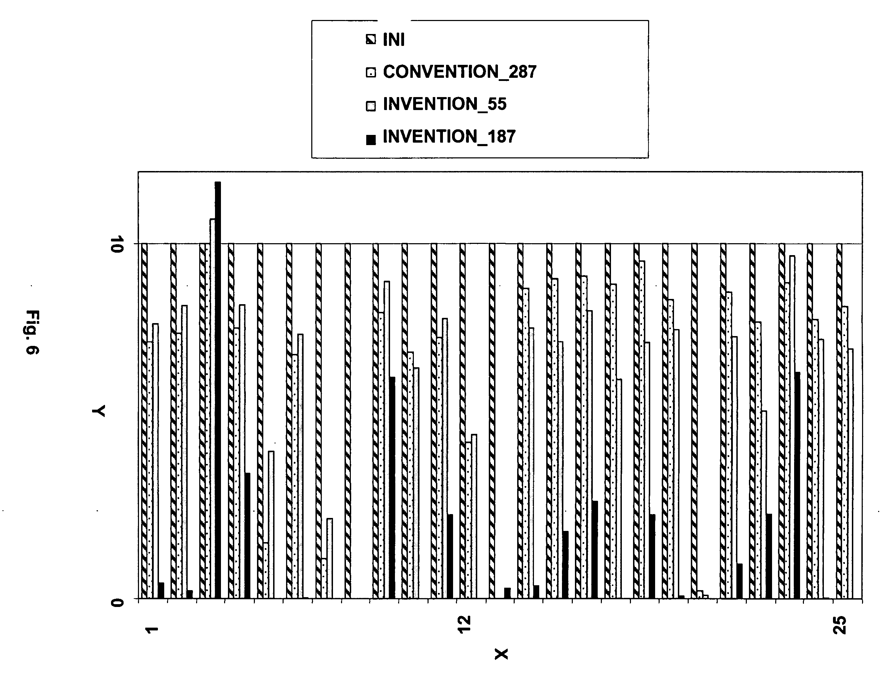

Les erreurs absolues sur les paramètres (skins) sont présentées sur la figure 6 pour le modèle initial et pour quelques modèles améliorés (CONVENTION_287, INVENTION_55 et INVENTION_187). Les modèles CONVENTION_ 287 et INVENTION_55 donnent des résultats assez proches et réduisent les erreurs par rapport au modèle initial. Cependant, les réductions d'erreurs sont limitées. Avec le modèle optimal du procédé selon l'invention INVENTION_ 187, les résultats sont nettement meilleurs.

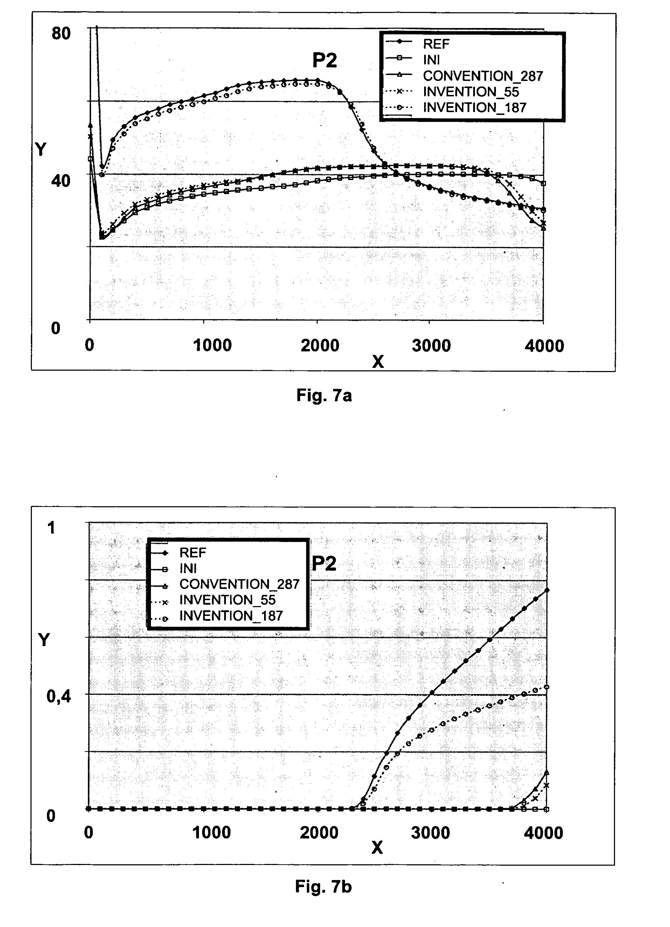

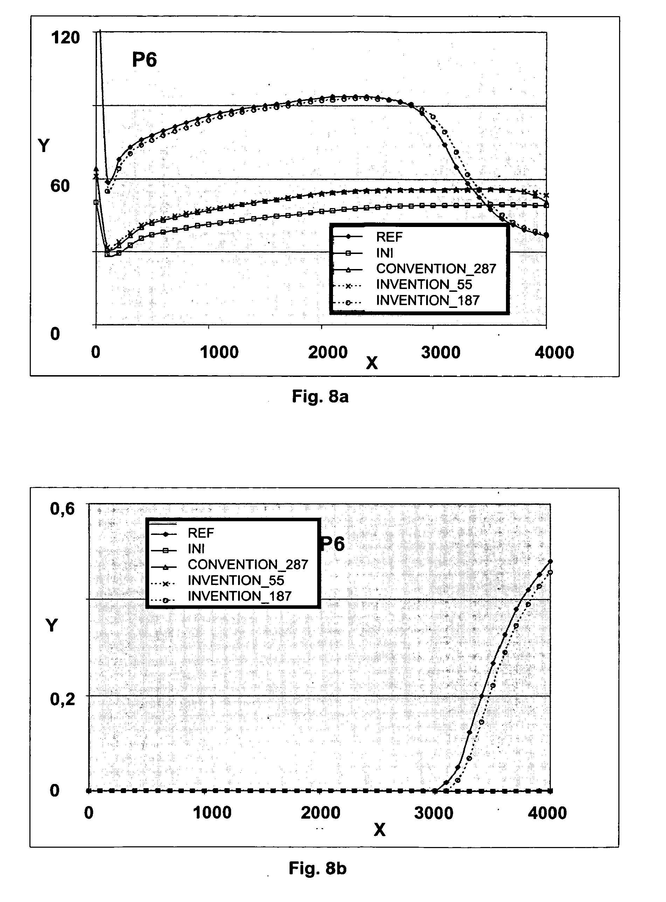

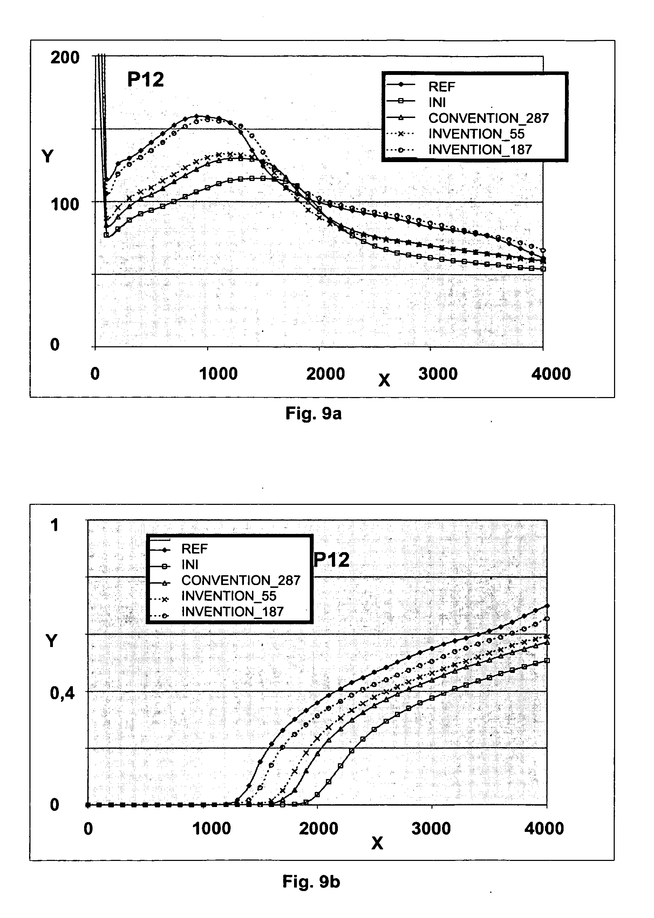

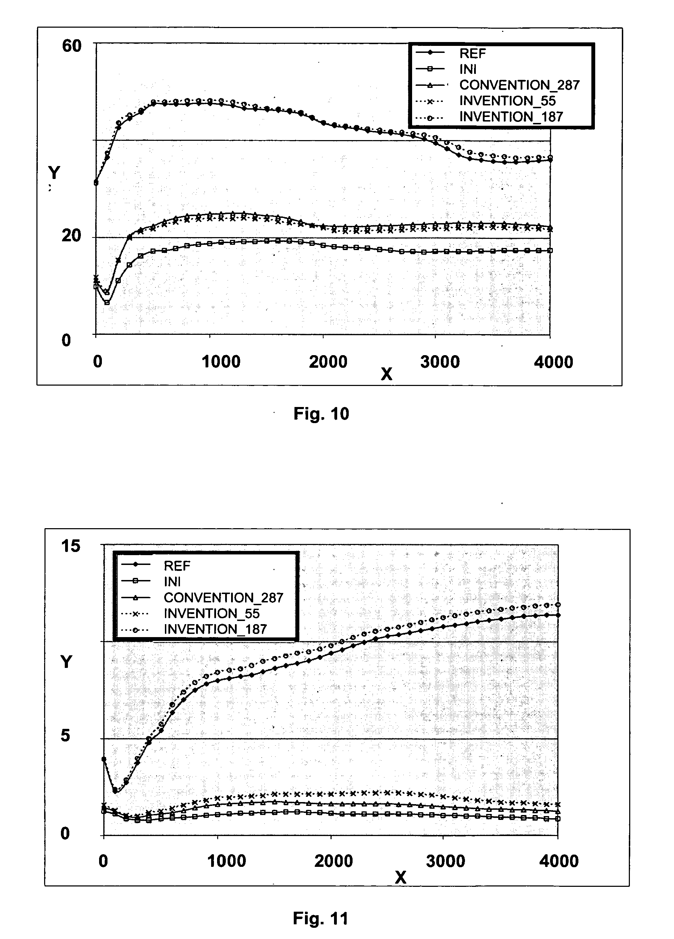

Les figures 7a à 11 montrent les résultats des simulations sur quelques puits (P2, P6, P12 et I6, I12). Nous pouvons considérer que les résultats sont équivalents pour les modèles CONVENTION_287 et INVENTION_55, qui réduisent légèrement les erreurs. Néanmoins, le modèle optimal obtenu par le procédé selon l'invention INVENTION_ 187 donne toujours des résultats nettement meilleurs. Avec ce procédé, nous pouvons obtenir un meilleur modèle avec moins de simulations.

Pour générer les coefficients de la matrice de perturbations, on peut appliquer la méthode décrite au paragraphe 3 (étapes i, ii et ii) : on génère d'abord aléatoirement 20 matrices de perturbations selon l'étape 3.i. On calcule les erreurs pour ces 50 matrices de perturbations selon l'étape 3.ii. On sélectionne la matrice qui a la plus petite erreur pour optimiser la fonction objectif de l'exemple.

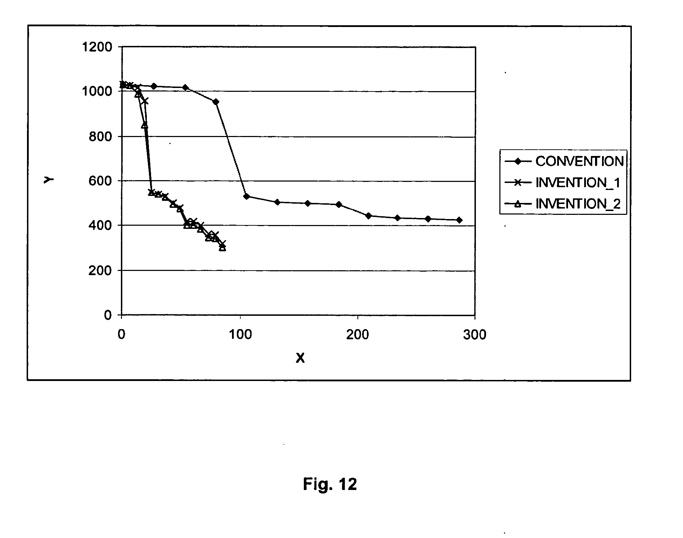

La figure 12 montre la comparaison de la fonction objectif pour la méthode conventionnelle (CONVENTION), la méthode selon l'invention utilisant la matrice de perturbations du tableau 2 (INVENTION_1) et la méthode selon l'invention la matrice de perturbations sélectionnée (INVENTION_2). L'axe X est le nombre de simulations, et l'axe Y est la valeur de la fonction objectif.

Les deux matrices de perturbations donnent des résultats très proches, meilleurs que ceux de la méthode conventionnelle (INVENTION_1 et INVENTION_2 réduisent la fonction objectif avec beaucoup moins de simulations). Mais, la matrice de l'INVENTION_1 peut être uniquement utilisée pour ce champ particulier, car nous connaissons la configuration des puits (les puits sont bien alignés, un puits injecteur est entouré de 4 puits producteur, et un puits producteurs est entouré de 4 puits injecteurs). La matrice de l'INVENTION_2 est générale, et nous n'avons pas besoin de connaitre la configuration particulière des puits. Donc, cette matrice peut être utilisée dans tous les cas.

Les paramètres de cet exemple étant des skins, la méthode permet de déterminer les valeurs de skins pour les 25 puits. On peut donc modifier la stratégie d'exploitation en déterminant des paramètres techniques. Par exemple, si la valeur de skin est trop grande dans un puits, on injecte un volume d'acide pour stimuler ce puits afin d'améliorer sa production. La quantité d'acide injecté peut être déterminée en fonction de la valeur du skin.

**Revendications**

1. Procédé pour exploiter un réservoir pétrolier à partir d'un modèle de réservoir constitué d'un ensemble de mailles, auxquelles sont affectées des valeurs d'au moins $M$ paramètres issues de mesures au sein dudit réservoir pétrolier, **caractérisée en ce que** l'on réalise les étapes suivantes:

   - on définit, en fonction desdits $M$ paramètres, une fonction objectif globale mesurant des écarts entre des valeurs de données d'historique mesurées et des valeurs de données d'historique simulées au moyen dudit modèle de réservoir ;
   - on décompose ladite fonction objectif globale en une somme de $k$ fonctions objectifs locales, chaque fonction objectif locale mesurant lesdits écarts sur une région géographique dudit réservoir, on définit chaque fonction objectif locale à partir de $m_k$ paramètres ayant un impact sur lesdites données d'historique correspondant à chaque région, lesdits $m_k$ paramètres étant choisis parmi lesdits $M$ paramètres, et chaque région étant déterminée de façon à minimiser ledit nombre $m_k$ de paramètres ;
   - on modifie des valeurs de paramètres en minimisant ladite fonction objectif globale au moyen d'une méthode de gradient, dans laquelle on estime des dérivées des fonctions objectif locales par rapport aux paramètres $m_k$ au moyen d'une technique de perturbation de paramètres basée sur une matrice de perturbations ayant un rang égal au nombre de paramètres $m_k$ de ladite fonction objectif locale ; et
   - on utilise ledit modèle ainsi modifié pour exploiter ledit réservoir.

2. Procédé selon la revendication 1, dans lequel lesdits $m_k$ paramètres sont sélectionnés au moyen d'une analyse de sensibilité pour chaque fonction objectif locale.

3. Procédé selon l'une des revendications précédentes, dans lequel les perturbations sont effectuées avec différentes valeurs pour un même paramètre.

4. Procédé selon l'une des revendications précédentes, dans lequel les données d'historique sont des données de production issues de mesures aux puits en réponse à une production du réservoir, et/ou des données de sismiques répétitives.

5. Procédé selon la revendication 4, dans lequel les données de production sont choisies parmi les données suivantes : production d'huile, production de gaz, production d'eau de puits, ratio gaz/huile (GOR), proportion d'eau de production, pression, température, composition des hydrocarbures.

6. Procédé selon l'une des revendications précédentes, dans lequel les $M$ paramètres sont choisis parmi les paramètres suivants : propriétés pétrophysiques telles que perméabilité, porosité, perméabilités relatives et pressions capillaires, propriétés pétroélastiques, distribution spatiale de faciès, endommagement autour de puits, indice de connectivité de puits, connexion ou rejets de failles, paramètres structuraux.

7. Procédé selon l'une des revendications précédentes, dans lequel on détermine des coefficients de ladite matrice de perturbations en réalisant les étapes suivantes :

   i. on réduit le nombre de coefficients à générer en appliquant un coefficient identique pour une perturbation donnée, aux paramètres intervenant dans une même fonction objectif locale ;
   ii. on génère aléatoirement lesdits coefficients de la matrice de perturbations tout en respectant l'étape i ;
   iii. on modifie lesdits coefficients de façon à minimiser une erreur sur l'estimation des dérivées des fonctions objectif locales par rapport aux paramètres $m_k$.

8. Procédé selon la revendication 7, dans lequel on calcule ladite erreur $\varepsilon_{tot}$ au moyen de la formule suivante :

$$\varepsilon_{tot} = \sum_{k=1}^{N_{reg}} \sum_{j=1}^{m_k} (D_j H_{mk} - 2m_k)^2$$

avec :

- $N_{reg}$ : nombre de fonctions objectif locales
- $D_jH_{mk}$ : dérivée numérique de $H_{mk}$ part rapport à un paramètre $\lambda_{k,j}$

$$H_{mk}(\lambda_{k,1}, \lambda_{k,2}, ..., \lambda_{k,m_k}) = \sum_{j=1}^{m_k} \sum_{i=1}^{m_k} \lambda_{k,i} \lambda_{k,j}$$

Fig. 1

Fig. 2

Fig. 3

Fig. 4

**Fig. 5**

Fig. 6

Fig. 7a

Fig. 7b

**Fig. 8a**

**Fig. 8b**

Fig. 9a

Fig. 9b

Fig. 10

Fig. 11

**Fig. 12**

# EP 2 375 352 A1

Europäisches
Patentamt

European
Patent Office

Office européen
des brevets

## RAPPORT DE RECHERCHE EUROPEENNE

Numéro de la demande

EP 10 29 0373

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 6 230 101 B1 (SCHLUMBERGER TECHNOLOGY CORPORATION) 8 mai 2001 (2001-05-08) * colonne 2, ligne 6 - colonne 2, ligne 28 * | 1-8 | INV. G06F17/50 G01V1/30 G01V11/00 |
| | ----- | | |
| A | DING D-Y ET AL: "Local parameterization of geostatistical realizations for history matching", SPE RESERVOIR SIMULATION SYMPOSIUM PROCEEDINGS - SPE RESERVOIR SIMULATION SYMPOSIUM 2009 2009 SOCIETY OF PETROLEUM ENGINEERS USA, vol. 1, 4 février 2009 (2009-02-04), pages 550-566, XP002579939, * le document en entier * | 1-8 | |
| | ----- | | |
| A | HU L Y ET AL: "Elements for an integrated geostatistical modeling of heterogeneous reservoirs", REVUE DE L'INSTITUT FRANCAIS DU PETROLE, EDITIONS TECHNIP. PARIS, FR LNKD-DOI:10.2516/OGST:2004011, vol. 59, no. 2, 1 janvier 2004 (2004-01-01), pages 141-155, XP002520429, ISSN: 1294-4475 * le document en entier, en particulier la partie 3.3 Iterative Calibration Procedure * | 1-8 | |
| | ----- | | |
| | -/-- | | |

DOMAINES TECHNIQUES RECHERCHES (IPC)

G01V
G06F

Le présent rapport a été établi pour toutes les revendications

| Lieu de la recherche | Date d'achèvement de la recherche | Examinateur |
|---|---|---|
| Munich | 5 septembre 2011 | Lerbinger, Klaus |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

......................................................................

& : membre de la même famille, document correspondant

EPO FORM 1503 03.82 (P04C02)

28

Europäisches
Patentamt

European
Patent Office

Office européen
des brevets

**RAPPORT DE RECHERCHE EUROPEENNE**

Numéro de la demande

EP 10 29 0373

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | REIS L C ET AL: "PRODUCTION DATA INTEGRATION USING A GRADUAL DEFORMATION APPROACH: APPLICATION TO AN OIL FIELD (OFFSHORE BRAZIL)", PROCEEDINGS OF THE EUROPEAN PETROLEUM CONFERENCE, XX, XX, 24 octobre 2000 (2000-10-24), pages 31-43, XP008021532, * le document en entier * ----- | 1-8 | |
| A,D | MASCHIO C ET AL: "A new methodology for assisted history matching using independent objective functions", PETROLEUM SCIENCE AND TECHNOLOGY, MARCEL DEKKER, NEW YORK, NY, US LNKD-DOI:10.1080/10916460701208389, vol. 26, no. 9, 1 juin 2008 (2008-06-01), pages 1047-1062, XP009126957, ISSN: 1091-6466 * le document en entier, en particulier page 1050, lignes 9 à 24 * ----- | 1-8 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Munich | 5 septembre 2011 | Lerbinger, Klaus |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

....................................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 29 0373

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-09-2011

| Document brevet cité au rapport de recherche | Date de publication | Membre(s) de la famille de brevet(s) | Date de publication |
|---|---|---|---|
| US 6230101 B1 | 08-05-2001 | AU 5175600 A<br>CA 2375412 A1<br>GB 2367669 A<br>WO 0075854 A1 | 28-12-2000<br>14-12-2000<br>10-04-2002<br>14-12-2000 |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Roggero, F. ; Hu, L.Y.** Gradual Deformation of Continuous Geostatistical Models for History Matching. *SPE 49004, Proc. SPE Annual Technical Conference and Exhibition, New Orleans, USA,* 1998
- **Gosselin, O. ; Cominelli, A. ; van den Berg, S. ; Chowdhury, S.D.** A Gradient-Based Approach for History Matching of Both Production and 4D Seismic Data. *Proceeding 7th European Conference on the Math. of Oil Recovery, Baveno, Italy,* 2000
- **Cheng, H. ; Wen, X. ; Milliken, W.J. ; Datta-Gupta, A.** Field Experiences with Assisted and Automated History Matching. *SPE 89857, SPE ATC&E, Houston, TX, USA,* 2004
- **Roggero, F. ; Ding, D.Y. ; Berthet, P. ; Lerat, O. ; Cap, J. ; Schreiber, P.E.** Matching of Production History and 4D Seismic Data - Application to the Girassol Field, Offshore Angola. *SPE 109929, SPE ATC&E, Anaheim, California, USA,* 2007
- **Gosselin, O. ; Cominelli, A ; van den Berg, S. ; Chowdhury, S.D.** A Gradient-Based Approach for History Matching of Both Production and 4D Seismic Data. *Proceeding 7th European Conference on the Math. of Oil Recovery, Baveno, Italy,* 2000
- **Mohamed, L. ; Christie, M. ; Demyanov, V.** Comparison of Stochastic Sampling Algorithms for Uncertainty Quantification. *SPE119139 presented at SPE Reservoir Simulation Symposium, Houston,* 02 Février 2009
- **Feraille, M. ; Roggero, F.** Uncertainty Quantification for Mature Field Combining the Bayesian Inversion Formalism and Experimental Design Approach. *9th European Conf. on Math. of Oil Recovery, Cannes, France,* 30 Août 2004
- **Maschio, C. ; Schiozer, D.J.** A new methodology for assisted history matching using independent objective functions. *Petroleum Science and Technology,* Juin 2008, vol. 26 (9), 1047-1062
- **A. Saltelli ; S. Tarantola ; F. Campolongo.** Sensitivity Analysis in Practice : A Guide to Assessing Scientific Models. Wiley, 2004
- **Shahadat Hossain ; Trond Steihaug.** Computing a Sparse Jacobian Matrix by Rows and Columns. *Optimization Methods and Software,* 1998, vol. 10, 33-48
- **D. Sinoquet ; F. Delbos.** Adapted Nonlinear Optimization Method for Production Data and 4D Seismic Inversion. *proceeding of European Conference on Mathematics of Oil Recovery, Bergen, Norvège,* 08 Septembre 2008